(19) Europäisches Patentamt
European Patent Office
Office européen des brevets

(11) **EP 1 873 179 A1**

(12) **EUROPEAN PATENT APPLICATION**

(43) Date of publication:
**02.01.2008 Bulletin 2008/01**

(51) Int Cl.:
*C08G 18/32* (2006.01)    *C08G 18/48* (2006.01)
*C08G 18/66* (2006.01)    *C08G 18/76* (2006.01)
*C08G 65/26* (2006.01)

(21) Application number: **07011436.8**

(22) Date of filing: **12.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **23.06.2006 US 473685**

(71) Applicant: **Bayer MaterialScience LLC**
**Pittsburgh, PA 15205-9741 (US)**

(72) Inventors:
 • **Haider, Karl W.**
   **Wexford**
   **PA 15090 (US)**

 • **Jividen, Veril**
   **Scott Depot**
   **WV 25560 (US)**
 • **Hager, Stanley L.**
   **Cross Lanes**
   **WV 25313 (US)**
 • **Moore, Micah N.**
   **Red House**
   **WV 25168 (US)**
 • **Dai, Dzung G.**
   **Dunbar**
   **WV 25064 (US)**

(74) Representative: **Perchenek, Nils et al**
   **Bayer MaterialScience AG**
   **Law and Patents**
   **Patents and Licensing**
   **51368 Leverkusen (DE)**

(54) **Viscoelastic foams with slower recovery and improved tear**

(57)    This invention relates to low resilience, viscoelastic foams which have slower recovery and improved tear strength, and to a process for the production of these foams. The viscoelastic foams of the invention comprise the reaction product of a polyisocyanate with an isocyanate-reactive component, in the presence of a blowing agent, a surfactant and a catalyst. Suitable isocyanate-reactive components comprise at least about 5% by weight of at least one polyether polyol having about 2 to about 4 reactive hydroxyl groups per molecule, an equivalent weight of about 280 to about 2,000, and which is the alkoxylation product of an organic compound which contains at least two aromatic rings, contains from about 2 to about 4 Zerewitinoff active hydrogen atoms and has an equivalent weight of about 100 to about 575.

**Description**

**BACKGROUND OF THE INVENTION**

This invention relates to low resilience, viscoelastic foams exhibiting slow recovery after compression and to a process for the production of these viscoelastic foams.

Isocyanate-based polymer foams and a process for the production of these foams is described in U.S. Patent 6,790,871. These flexible isocyanate polymer foams of this patent are characterized by low resiliency, a $T_g$ of less than or equal to about 0°C, and a change in tan $\partial$ less than or equal to about 35% from a median value measured over a temperature range of from about -20°C to about +60°C. These flexible, low resiliency foams are prepared from a reaction mixture comprising urethane-forming chemicals, water, and a plasticizer selected from the group consisting of a halogenated paraffin, a $C_2/C_4$ aliphatic polymer comprising a primary hydroxyl group and mixtures thereof.

Flexible polyurethane foams which exhibit low resilience and a process for the production of these polyurethane foams is disclosed in EP 1457508. These flexible foams are characterized by a core resilience of 30% or lower and a glass transition point within a range of from -80°C to -60°C. The polyurethane foams of this patent comprise the reaction product of a polyol with a polyisocyanate component, in the presence of a catalyst, a foam stabilizer and a blowing agent, in which the polyol component is characterized by a hydroxyl value of from 5 to 15 mg KOH/g, and is preferably a polyoxyalkylene polyol obtained by ring-opening addition polymerization of an alkylene oxide by means of a DMC complex catalyst. Initiators for the polyol disclosed as being suitable therein include a wide variety of compounds including bisphenol A, and condensation type compounds such as phenol and/or novolak resins.

U.S. Patent 6,204,300 describes low resilience urethane foam. These foams comprise a polyol, a polyisocyanate, a catalyst and a blowing agent, and have at least one glass transition point in each of the temperature range of -70°C to -20°C and the temperature range of 0°C to 60°C. Preferred polyols are selected from the group consisting of polyoxyalkylene polyols, vinyl polymer-containing polyoxyalkylene polyols, polyester polyols and polyoxyalkylene polyester block copolymer polyols.

Soft polyurethane foams and a method for the production of these foams is disclosed in U:S. Patent 6,136,879. These foams have a high degree of energy absorbing characteristics and a nice feel to it. The rebound resilience of these foams is not higher than 30% and the temperature dependency of compression force deflection is represented by a difference between a 25% compression force deflection value at -20°C and a 25% compression force deflection value at +20°C is not greater than 0.030 kg/cm$^2$. Suitable reaction components include a polyisocyanate, a polyol having a molecular weight of 2000 to 8000 and a monohydric alcohol having a molecular weight of no more than 100. In addition, the reaction may occur in the presence of a small quantity of a compound such as, for example, nonyl phenol or an ethoxylated product of a compound such as nonyl phenol.

It is known and described in the art that polyols can be prepared by oxyalkylation of various starters, including compounds which contain one or more aromatic ring groups such as, for example, phenolic compounds. One known process for oxyalkylating phenolic compounds is described in U.S. Patent 6,541,673. This process is a two-stage process in which an initial portion of the oxyalkylation is conducted at a high temperature, while a second oxyalkylation is conducted at a lower temperature. In addition, the pressure of the oxyalkylation may be staged, with the highest pressure occurring during the high temperature phase of the reaction.

Low resilience, viscoelastic foams are widely produced in commerce and find application in numerous articles such as mattresses, pillows, furniture, automotive, and ergonomic items. In order to fulfill these application requirements the foams are expected to conform to the shape of a body resting on the foam surface and to slowly, but completely recover once the body is removed. However, in order to enhance the conformance and reduce the recovery rate of a viscoelastic foam it is common practice to reduce the crosslink density of the polyurethane by running at reduced isocyanate index or with lower functionality intermediates. This can result in foam with inadequate strength properties, especially low tear strength, and failure in applications involving prolonged stressing. For example, viscoelastic topper pads for beds are often tightly folded and packed into a box for shipping and storage until sold. The high tensile stress at the outside of each folded crease can cause the foam to tear during storage if the foam does not have sufficient tear resistance. A foam providing better body conformance and slower recovery along with improved tear resistance would be a welcomed development.

Another common trait of viscoelastic foam is high temperature sensitivity. Thus, it is not uncommon for a viscoelastic foam to exhibit a soft and pliable feel at room temperature but become very hard and brittle to the touch as the temperature is lowered. A viscoelastic foam with significantly reduced temperature sensitivity would be useful for applications that involve exposure to lower temperatures such as foam cushioning components in automobiles.

It has been unexpectedly found that low resilience, viscoelastic foams produced by the process of the current invention provide slower recovery rates and better tear resistance. The foams also exhibit reduced sensitivity to temperature change.

## SUMMARY OF THE INVENTION

This invention relates to a process to produce low resilience, viscoelastic foams which exhibit slow recovery, improved tear strength, and improved temperature sensitivity rating. The present invention also relates to the viscoelastic foams produced by this process.

For the purposes of this invention, low resilience, viscoelastic foams are defined as having a resilience value of less than 25% as measured by the ball rebound test procedure of ASTM D3574-03.

The process of producing the low resilience, viscoelastic foams of this invention comprises:

(A) reacting

(1) a polyisocyanate,

with

(2) an isocyanate-reactive component,

in the presence of

(3) at least one blowing agent,
(4) at least one surfactant,

and

(5) at least one catalyst,

at an isocyanate index of about 70 to about 120.

Suitable isocyanate-reactive components (2) comprise:

(a) from 5 to 100% by weight, based on 100% by weight of component (2), of at least one polyether polyol which contains an average of about 2 to about 4 reactive hydroxyl groups per molecule, has an equivalent weight of about 280 to about 2000, and which is the alkoxylation product of one or more organic compounds which contains at least two aromatic rings, contains from about 2 to about 4 Zerewitinoff active hydrogen atoms, and has an equivalent weight of about 100 to about 575;

and, optionally,

(b) from 0 to 95% by weight, based on 100% by weight of component (2), of one or more isocyanate-reactive compounds, with the proviso that this compound is different than polyether polyol (a).

The low resilience, viscoelastic foams of the present invention comprise the reaction product of:

(1) a polyisocyanate,

with

(2) an isocyanate-reactive component,

in the presence of

(3) at least one blowing agent,
(4) at least one surfactant,
and
(5) at least one catalyst,

wherein the isocyanate-reactive component (2) comprises at least one polyether polyol as described above, and the reaction is conducted at an isocyanate index of about 70 to about 120.

**DETAILED DESCRIPTION OF THE INVENTION**

In accordance with the present invention, suitable polyisocyanates to be used as component (1) include, for example, monomeric diisocyanates, NCO prepolymers, and preferably liquid polyisocyanates. Suitable monomeric diisocyanates may be represented by the formula $R(NCO)_2$ in which R represents an organic group obtained by removing the isocyanate groups from an organic diisocyanate having a molecular weight of about 56 to 1,000, preferably about 84 to 400. Diisocyanates preferred for the process according to the invention are those represented by the above formula in which R represents a divalent aliphatic, hydrocarbon group having 4 to 12 carbon atoms, a divalent cycloaliphatic hydrocarbon group having 6 to 13 carbon atoms, a divalent araliphatic hydrocarbon group having 7 to 20 carbon atoms or a divalent aromatic hydrocarbon group having 6 to 18 carbon atoms. Preferred monomeric diisocyanates are those wherein R represents an aromatic hydrocarbon group.

Examples of the suitable organic diisocyanates include 1,4-tetramethylene diisocyanate, 1,6-hexamethylene diisocyanate, 2,2,4-trimethyl-1,6-hexamethylene diisocyanate, 1,12-dodecamethylene diisocyanate, cyclohexane-1,3- and -1,4-diisocyanate, 1-isocyanato-2-isocyanatomethyl cyclopentane, 1-isocyanato-3-isocyanatomethyl-3,5,5-trimethylcyclohexane, bis(4-isocyanatocyclohexyl) methane, 2,4'-dicyclohexylmethane diisocyanate, 1,3- and 1,4-bis(isocyanatomethyl) cyclohexane, bis(4-isocyanato-3-methylcyclohexyl) methane, $\alpha,\alpha,\alpha',\alpha'$-tetramethyl-1,3- and/or-1,4-xylylene diisocyanate, 1-isocyanato-1-methyl-4(3)-isocyanatomethylcyclohexane, 2,4- and/or 2,6-hexahydrotoluene diisocyanate, 1,3- and/or 1,4-phenylene diisocyanate, 2,4- and/or 2,6-toluene diisocyanate, 2,2'-, 2,4'- and/or 4,4'-diphenylmethane diisocyanate, 1,5-diisocyanato naphthalene and mixtures thereof. Aromatic polyisocyanates containing 3 or more isocyanate groups such as 4,4',4"-triphenylmethane triisocyanate and polymethylene poly(phenylisocyanates) obtained by phosgenating aniline/formaldehyde condensates may also be used.

In accordance with the present invention, at least a portion of the polyisocyanate composition may be present in the form of an NCO prepolymer. The NCO prepolymers, which may also be used as the polyisocyanate composition in accordance with the present invention, are prepared from the previously described polyisocyanates and organic compounds containing at least two isocyanate-reactive groups, preferably at least two hydroxyl groups.

It is preferred that the polyisocyanates of the present invention are aromatic polyisocyanates. Some examples of suitable aromatic polyisocyanates are 1,3- and/or 1,4-phenylene diisocyanate, 2,4- and/or 2,6-toluene diisocyanate, 2,2'-, 2,4'- and/or 4,4'-diphenylmethane diisocyanate, 1,5-diisocyanato naphthalene and mixtures thereof. Aromatic polyisocyanates containing 3 or more isocyanate groups such as 4,4',4"-triphenylmethane triisocyanate and polymethylene poly(phenylisocyanates) obtained by phosgenating aniline/formaldehyde condensates may also be used.

It is more preferred that the polyisocyanates for the presently claimed invention are toluene diisocyanate, various isomers of diphenylmethane diisocyanate, and polymethylene poly(phenylisocyanate) compositions. The polymethylene poly(phenylisocyanate) compositions which are more preferred in the present invention are those having a functionality of from about 2.1 to about 3.5, preferably 2.1 to 2.8 and most preferably of 2.1 to 2.4, and an NCO group content of about 26% to about 33.4%, preferably about 30.5% to about 33%, and a monomeric diisocyanate content of from about 20% to about 90% by weight, preferably from about 40% to about 90%. The polymeric MDI content of these isocyanates varies from about 10 to about 80% by weight, preferably from about 10% to about 60% by weight. Polymeric MDI as used herein, refers to polymethylene poly(phenylisocyanate) which in addition to monomeric diisocyanate (i.e., two-ring compounds) contains three-ring and higher ring containing products.

In accordance with the present invention, (2) the isocyanate-reactive component typically comprises:

(a) from at least about 5% to about 100% by weight, of at least one polyether polyol containing an average of about 2 to about 4 reactive hydroxyl groups per molecule, having an equivalent weight of about 280 to about 2000, and which is the alkoxylation product of one or more organic compounds in which each organic compound contains at least two aromatic rings, from about 2 to about 4
(b) Zerewitinoff active hydrogen atoms and has an equivalent weight of about 100 to about 575;

and

(c) from 0% to about 95% by weight, of at least one isocyanate-reactive compound, with the proviso that this compound is different than the one or more polyether polyols defined in (a) above,

with the sum of the %'s by weight of (a) and (b) totaling 100% by weight of component (2).

Component (a), the polyether polyol which contains an average of about 2 to about 4 reactive hydroxyl groups per molecule and has an equivalent weight of about 280 to about 2000, as described above, of the isocyanate-reactive component (2), to be used in the present invention, is preferably present in an amount of at least 40% by weight, and more preferably in an amount of at least 60% by weight, based on 100% by weight of component (2) the isocyanate-reactive component. The balance of component (2) the isocyanate-reactive component comprises (b) at least one isocyanate-reactive compound with the proviso that this compound is different than component (a) as described above. Thus, component (b) is preferably present in an amount of less than or equal to about 60%, and more preferably less than or equal to about 40% by weight, based on 100% by weight of component (2) the isocyanate-reactive component.

Suitable compounds to be used as (b) the one or more isocyanate-reactive compound of component (2) include, for example, one or more compounds selected from the group consisting of polyester polyols, polycaprolactones, polythioethers, polycarbonates, polyacetals, polymer polyols, PHD polyols, PIPA polyols, etc, and low molecular weight polyhydroxy crosslinkers, chain extenders, and reactive modifiers etc., and mixtures thereof. It is also to be understood that mono-functional hydroxyl containing components may be suitable for component (b). It is also possible that the so-called conventional polyether polyols are present as part or all of component (b) in the isocyanate-reactive component (2). All of these compounds are known in the field of polyurethane chemistry.

As used herein, the term conventional polyether polyols refers to polyether polyols that may overlap with the above described polyether polyols of component (a) in terms of average hydroxyl functionality and average equivalent weight, but it excludes those polyether polyols which comprise an alkoxylation product of a starter in which the starter comprises an organic compound containing at least two aromatic rings, from about 2 to about 4 Zerewitinoff active hydrogen atoms and has an equivalent weight of about 100 to about 575. The conventional polyether polyols may also be used as the base polyol in compounds such as, for example, PHD polyols, PIPA polyols and polymer polyols. These types of compounds can generally be described as stable dispersions of solids (such as the polymer formed by the free radical initiated reaction of styrene and acrylonitrile in the case of polymer polyols) in a suitable base polyol.

Suitable polyether polyols (a) which are used as part or all of the isocyanate-reactive component (2) herein typically have an equivalent weight of at least about 280, preferably at least about 470 and more preferably at least about 700. These polyether polyols also typically have an equivalent weight of less than or equal to about 2,000, preferably less than or equal to about 1,600, and more preferably less than or equal to about 1,400. The polyether polyols may have an equivalent weight ranging between any combination of these upper and lower values, inclusive, e.g. from about 280 to about 2,000, preferably from about 470 to about 1,600, and more preferably from about 700 to about 1,400.

These polyether polyols also typically contain an average of at least about 2 hydroxyl groups per molecule. The polyether polyols also typically contain less than or equal to about 4 hydroxyl groups per molecule, and preferably less than or equal to about 3. In addition, these polyether polyols may contain an average number of hydroxyl groups per molecule ranging between any combination of these upper and lower values, inclusive, e.g. from about 2 to about 4, preferably from about 2 to about 3, and more preferably 2 hydroxyl groups per molecule.

These polyethers are known and may be obtained, for example, by alkoxylating one or more suitable organic compounds with one or more alkylene oxides. Suitable organic compounds include those which contain at least two aromatic rings, have an equivalent weight of from about 100 to about 575, and have from about 2 to about 4 Zerewitinoff active hydrogen atoms. The suitable organic compounds contain at least about 2 aromatic rings per compound, preferably from 2 to 4 aromatic rings per compound, and more preferably 2 aromatic rings per compound.

These organic compounds which are alkoxylated to form the polyether polyols (2)(a) in the present invention typically have an equivalent weight of at least about 100, and preferably at least about 110. These organic compounds also typically have an equivalent weight of less than or equal to about 575, and preferably less than or equal to about 400. In a particularly preferred embodiment, the organic compound has an equivalent weight of about 114. The organic compounds may have an equivalent weight ranging between any combination of these upper and lower values, inclusive, e.g. from about 100 to about 575, preferably from about 110 to about 400.

These organic compounds used to prepare the polyether polyols also typically contain at least about 2 Zerewitinoff active hydrogen atoms per compound. The organic compounds also typically contain less than or equal to about 4 Zerewitinoff active hydrogen atoms, and preferably less than or equal to about 3 Zerewitinoff active hydrogen atoms. In addition, these organic compounds may contain a number of Zerewitinoff active hydrogen atoms ranging between any combination of these upper and lower values, inclusive, e.g. from about 2 to about 4, and preferably from about 2 to about 3. Most preferably, the organic compounds contain about 2 Zerewitinoff active hydrogen atoms. Hydroxyl and amine functional groups represent the preferred sources of Zerewitinoff active hydrogen atoms.

In addition, the organic compounds used to prepare the polyether polyols also typically contain at least about 2 and less than or equal to 4 aromatic rings per compound. Preferably, the organic compound contains 2 aromatic rings.

Bisphenol A (i.e. 2,2-bis(4-hydroxyphenol)propane or BPA) is a particularly preferred organic compound in the present invention.

In accordance with the present invention, it is preferred that the suitable organic compounds for preparing the polyether polyols do not contain fused aromatic rings. In other words, these organic compounds preferably contain 2 or more aromatic rings in which the aromatic rings are joined together by a suitable linking moiety that is less than eight atoms in length and preferably less than four atoms in length, exclusive of side chains. The most preferred linking moiety is an alkyl group which is from 1 to 4 carbon atoms in length, preferably 1 to 2 carbon atoms. In addition, the alkyl groups which join the aromatic rings together may or may not contain Zerewitinoff active hydrogen atoms.

The linking moieties may also contain ether linkages as in dihydroxybenzyl ethers such as salicyl ether 2-[(2-hydroxyphenyl)-methoxymethyl]phenol and in the low molecular weight liquid phenoxy resins.

Some examples of suitable organic compounds to be used as starters in accordance with the present invention include, for example, 2,2-bis(4-hydroxylphenyl)propane (i.e. bisphenol A), 2,2-bis(4-hydroxyphenyl)butane, 2,2'-methylenediphenol, 5-(3,5-dihydroxyphenyl)benzene-1,3-diol (i.e. diresorcinol), 1,1,3 -tris(hydroxylphenyl)propane, 4-[1,1-bis(4-hydroxyphenyl)ethyl]phenol, 4-(4-hydroxyphenyl)sulfonylphenol (Bisphenol S), 4-[2-(4-hydroxyphenyl)butan-2-yl]phenol (Bisphenol B), 2-[(2-hydroxyphenyl)methyl]phenol (Bisphenol F), 2-[4-[2-[4-(2-hydroxyethoxy)phenyl]-propan-2-yl]phenoxy]ethanol, 1-[4-[2-[4-(2-hydroxypropoxy)phenyl]propan-2-yl]phenoxy]propan-2-ol, 4-[2-(4-hydroxy-3-methyl-phenyl)propan-2-yl]-2-methyl-phenol (Bisphenol C), 4-[(E)-4-(4-hydroxyphenyl)hex-3-en-3-yl]phenol, 4-[2-(4-hydroxy-3-propan-2-yl-phenyl)propan-2-yl]-2-propan-2-yl-phenol (Bisphenol G), 2,4-bis[2-(4-hydroxyphenyl)propan-2-yl]phenol (Bisphenol I), 2-[2-(4-hydroxyphenyl)propan-2-yl]phenol (2,4'-Bisphenol A), 4-(4-hydroxyphenyl)phenol, 2-[(4-hydroxyphenyl)methyl]phenol, 4,4'-dihydroxybibenzyl, 4-[2-(4-hydroxyphenyl)ethyl]phenol, 3-[2-(3-hydroxy-phenoxy)ethoxy]phenol, 3-[4-(3-hydroxyphenyl)hexan-3-yl]phenol, etc.

As indicated, the organic compounds may also contain Zerewitinoff active hydrogen atoms derived from amine functional groups such as 4-[(4-aminophenyl)methyl]aniline and 2-[(4-aminophenyl)methyl]aniline (i.e. MDA isomers), triphenylguanidine, diphenylmethanediamine, 4-[(4-amino-3-methyl-phenyl)methyl]-2-methyl-aniline, 4-[(2-aminophenyl)methyl]-2-ethyl-6-methyl-aniline, 4-[(4-aminophenyl)methyl]-2-ethyl-6-methyl-aniline, etc.

Low equivalent weight alkoxylates of these chemical compounds also represent a preferred class of organic compounds. Ethoxylates and propoxylates are preferred. Bisphenol A and bisphenolalkoxylates are the most preferred compounds.

In accordance with the present invention, one or more of the above described organic compounds is alkoxylated with one or more alkylene oxides (i.e. epoxides) to form the polyether polyol (2)(a) having the above described characteristics, i.e. equivalent weight and average number of hydroxyl groups per molecule. Suitable epoxides include compounds such as, for example, ethylene oxide, propylene oxide, butylene oxide, styrene oxide or epichlorohydrin Ethylene oxide (EO) and/or propylene oxide (PO) are preferred. A weight ratio of PO:EO of from 50:50 up to 100:0 is preferred. It is more preferred that the weight ratio of PO:EO is 70:30 to 100:0. The alkoxylation of the organic compound which is the starter typically occurs in the presence of one or more suitable catalysts, such as, for example, DMC, $BF_3$ or KOH. It is also possible to chemically add these epoxides, preferably ethylene oxide and propylene oxide, in admixture or successively to organic compounds as described above which contain at least two aromatic rings, from about 2 to about 4 Zerewitinoff active hydrogen atoms and having an equivalent weight of about 100 to about 575.

A most preferred polyether polyol (2)(a) for the present invention is a bisphenol-A started polyether polyol. This bisphenol A started polyether polyol has an equivalent weight of at least about 280, preferably at least about 470 and most preferably at least about 700. This bisphenol A started polyether polyol also has an equivalent weight of less than or equal to about 2,000, preferably less than or equal to about 1,600 and most preferably less than or equal to about 1400. In addition, the bisphenol A started polyether polyol may have an equivalent weight ranging between any combination of these upper and lower values, inclusive, e.g. from having an equivalent weight of about 280 to about 2,000, and preferably about 470 to about 1,600 and most preferably about 700 to about 1,400. Such bisphenol A started polyether polyols contain about 2 hydroxyl groups per molecule.

In one embodiment of the present invention, the polyether polyol (2)(a) and at least a portion of the isocyanate-reactive compound (2)(b) are prepared simultaneously by alkoxylating the one or more organic compounds described above which are suitable for forming polyether polyol (2)(a), and at least a portion of the suitable starters for the isocyanate-reactive compound (2)(b). Thus, in this embodiment, the starters for (2)(b) may be low molecular weight compounds such as ethylene glycol, propylene glycol, glycerol, trimethylolpropane, etc. which form polyether polyols (2)(b) upon alkoxylation.

In another embodiment of the present invention, the isocyanate-reactive component (2)(b) may comprise one or more higher molecular weight compounds such as, for example, a polyether polyol. In this embodiment, it is possible to further alkoxylate this polyether polyol in a heel process along with the organic compounds which are alkoxylated to form the polyether polyols (2)(a). In a heel type process, it is preferred that the alkoxylation occurs in the presence of one or more double metal cyanide (DMC) catalysts.

A preferred heel process for preparation of the isocyanate-reactive component (2) herein is the one-stage "heel" process as described in commonly assigned U.S. Application Serial Number_____ [Agent Docket No. 8759], filed in the United States Patent and Trademark Office on _____, 2006, which is the same day the present application was filed in the United States Patent and Trademark Office, the disclosure of which is hereby incorporated by reference. As described therein, the preferred bisphenol A started polyether polyols are prepared by mixing bisphenol A with a bisphenol A started polyether polyol that has an equivalent weight of about 280 to about 2000, and alkoxylating this mixture with one or more alkylene oxides in the presence of one or more double metal cyanide catalysts. Suitable alkylene oxides include, for example, ethylene oxide, propylene oxide, butylene oxide, etc. The polyether polyols (2)(a) of the isocyanate-reactive component (2) in the present invention are not, however, limited to those produced by the one-stage process of commonly assigned, copending U.S. Application Serial No. _____, [Agent Docket No. 8759], filed on _____, 2006.

In accordance with the present invention, some examples of double metal cyanide compounds that can be used in the invention include but are not limited to, for example, zinc hexacyano-cobaltate(III), zinc hexacyanoferrate (III), nickel hexacyanoferrate(II), cobalt hexacyanocobaltate(III), and the like. Further examples of suitable double metal cyanide complexes are listed in U.S. Patent 5,158,922, the disclosure of which is herein incorporated by reference. Zinc hexacyanocobaltate(III) is preferred.

Particularly preferred are those solid double metal cyanide (DMC) catalyst which comprise a DMC compound and an organic complexing agent, and are prepared in from about 5 to about 80 wt.%., based on the amount of catalyst, of a polyether having a number average molecular weight greater than about 500. These catalysts exhibit enhanced activity for epoxide polymerizations compared with similar catalysts prepared in the absence of the polyether. Such catalysts are known and described in, for example, U.S. Patent 5,482,908, the disclosure of which is herein incorporated by reference. The double metal cyanide (DMC) compounds which are suitable are the reaction products of a water-soluble metal salt and a water-soluble metal cyanide salt.

Suitable blowing agents to be used as component (3) in accordance with the present invention include but are not limited to compounds such as, for example, water, carbon dioxide, acetone, chlorinated hydrocarbons, fluorocarbons, chlorofluorocarbons, hydrochlorofluorocarbons, perfluorocarbons, low boiling hydrocarbons and other low boiling organic compounds. Some examples of suitable hydrofluorocarbons include compounds such as 1,1-dichloro-1-fluoroethane (HCFC-141b), 1-chloro-1,1-difluoroethane (HCFC-142b), and chlorodifluoromethane (HCFC-22); of suitable hydrofluorocarbons include compounds such as 1,1,1,3,3-pentafluoro-propane (HFC-245fa), 1,1,1,2-tetrafluoroethane (HFC-134a), 1,1,1,3,3,3-hexafluoropropane (HFC-236fa), 1,1,2,3,3,3-hexafluoropropane (HFC-236ea), and 1,1,1,4,4,4-hexafluorobutane (HFC-356mffm); of suitable perfluorinated hydrocarbons include compounds such as perfluoropentane or perfluorohexane; and of suitable hydrocarbons include compounds such as various isomers of butane, pentane, cyclopentane, hexane, or mixtures of thereof. Water and carbon dioxide are more preferred blowing agents, with water being most preferred.

In accordance with the present invention, it is preferred that the amount of blowing agent used is sufficient to produce foams having a density in the range of less than or equal to about 20 pcf, more preferably less than or equal to about 12 pcf, and most preferably less than or equal to about 8 pcf. The foams of the invention will typically have a density greater than or equal to about 0.5 pcf, preferably greater than or equal to about 1.0 pcf and most preferably greater than or equal to about 1.5 pcf. In addition, the foams of the invention may have a density ranging between any combination of these upper and lower values, inclusive, e.g. from 0.5 pcf to 20 pcf, preferably from 1.0 pcf to 12 pcf, and most preferably from 1.5 pcf to 8 pcf.

Suitable surfactants to be used as component (4) in accordance with the present invention include, for example, any of the known surfactants which are suitable for viscoelastic polyurethane foams. These include, for example, but are not limited to silicone-type surfactants, fluorine-type surfactants, etc. One type of silicone surfactants is specifically a compound having a polysiloxane chain, in which the polysiloxane chain comprises an organopolysiloxane chain having an organic group in the side chain. Dimethylsiloxane is an example of this. Organo-silicone copolymer surfactants are widely used in the production of polyurethane foams with polysiloxane-polyoxyalkylene copolymers representing a preferred class. Some examples of suitable surfactants include those compounds commercially available from Degussa - Goldschmidt, General Electric, Air Products etc. such as those sold as NIAX Silicones L-620, L-5614, L-627, L-6164, L-3858, L-635, U-2000, etc. and TEGOSTAB Silicones B-8002, B-2370, B-8229 B-8715F, etc. and DABCO DC5160, DC5169, DC5164, etc.

In accordance with the invention, one or more catalysts (5) are used. Any suitable urethane catalyst may be used, including the known tertiary amine compounds and organometallic compounds. Examples of suitable tertiary amine catalysts include triethylenediamine, N-methylmorpholine, pentamethyl diethylenetriamine, dimethylcyclohexylamine, tetra-methylethylenediamine, 1-methyl-4-dimethylaminoethyl-piperazine, 3-methoxy-N-dimethyl-propylamine, N-ethylmorpholine, diethylethanolamine, N-cocomorpholine, N,N-dimethyl-N',N'-dimethylisopropyl-propylene diamine, N,N-diethyl-3-diethyl aminopropylamine and dimethyl-benzyl amine. Examples of suitable organometallic catalysts include organomercury, organolead, organoferric, organotitanate, and organotin catalysts, with organotin catalysts being preferred. Suitable organotin catalysts include preferably, tin(II) salts of carboxylic acids, such as tin(II) acetate, tin(II) octoate, tin(II) ethylhexoate, and tin(II) laurate, as well as tin(IV) compounds, such as dibutyltin dilaurate, dibutyltin dichloride, dibutyltin diacetate, dibutytin maleate, and dioctyltin diacetate. Suitable bismuth compounds include bismuth neodecanoate, bismuth versalate, and various bismuth carboxylates known in the art. Metal salts such as stannous chloride can also function as catalysts for the urethane reaction. Such catalysts are typically used in an amount, which measurably increases the rate of reaction of the polyisocyanate. Typical amounts are about 0.05 to about 5 pbw, preferably about 0.1 to about 2 pbw of catalyst per 100 parts by weight of component (2), the isocyanate-reactive component.

In addition, various other optional additives known to those in the art may be used in the viscoelastic foams of the invention including, for example, release agents, pigments, cell regulators, flame retarding agents, plasticizers, dyes, antistatic agents, antimicrobials, antioxidants, UV stabilizers, mineral oils, fillers and reinforcing agents.

Commercial production of low resilience, viscoelastic foams involves mixing together a suitable polyisocyanate, and an isocyanate-reactive component in the presence of at least one blowing agent, at least one surfactant, and at least one catalyst, which are known in the field of polyurethane chemistry to be suitable for preparing viscoelastic foams.

The low resilience, viscoelastic polyurethane foams of the present invention can be produced by a number of foaming processes that are well known to those in the art (see for example POLYURETHANE HANDBOOK, Gunter Oertel, Ed., Hanser Publications, Munich, .COPYRGT. 1985). A continuous or discontinuous "one-shot" foaming process is preferred. In the "one-shot" continuous process the formulation ingredients are brought together, mixed and continuously deposited typically onto a moving conveyor on which the foaming mixture is allowed to rise freely to full height (e.g. slabstock process). Moving side constraints typically control the width of the foam produced. In discontinuous "one-shot" processes, controlled amounts of the reactants and other ingredients are mixed together and then deposited into a container where the foam rises and cures. One example is a box foam process where the chemicals are mixed and depositied into a box of the desired dimensions and allowed to rise freely or to a controlled height if a top constraint is used to limit the rise. These boxes can have large cross-sections (6 ft x 12 ft) or be relatively small for specialty parts. The large buns of foam produced in box foaming and in continuous slabstock production can be sliced and trimmed to different sizes and can be cut to various shapes as needed for the application. This is the preferred process for producing viscoelastic foam mattresses and mattress toppers.

A widely used and commercially important discontinuous process is the "one-shot" molded foam process in which the measured amounts of ingredients are deposited into a mold of a desired shape. The foam rises and fills the mold cavity to yield a part with the shape needed for the intended application. This process is commonly used to produce viscoelastic foam pillows and automotive parts such as headrests.

The process and the production of free rise viscoelastic foams in accordance with the present invention is further described in detail in U.S. Patent 6,391,935, the disclosure of which is herein incorporated by reference.

Viscoelastic foam has found widespread use in the production of pillows, mattress toppers, ergonomic pads, sports equipment, and the like. It was unexpectedly found that the polyether polyols of the present invention provide low resilience, viscoelastic foams exhibiting slow recovery from deformation, improved tear strength, and low temperature sensitivity, compared to those foams prepared with conventional viscoelastic polyether polyols. As set forth the low resilience, viscoelastic foams of the current invention are defined as having resilience values of less than 25% as measured by the ball rebound procedure of ASTM D3574-03. Preferably, the foams have resilience values of less than 20% and most preferably less than 15%. The temperature sensitivity ratings of these foams is typically greater than 0.4.

In accordance with the present invention, the relative amounts of polyisocyanate component and isocyanate-reactive component, including any water present, are such that the Isocyanate Index (stoicheometric percentage of NCO available to react with isocyanate-reactive components) is typically at least about 70, preferably at least about 80, and more preferably at least about 90. The relative amounts of the polyisocyanate component and isocyanate-reactive component are also typically such that the Isocyanate Index (NCO Index) is less than or equal to about 120, preferably less than or equal to about 115, and more preferably less than or equal to about 110. Finally, the relative amounts of polyisocyanate and isocyanate-reactive components are present in amounts such that the Isocyanate Index ranges between any combination of these upper and lower values, inclusive, e.g. from about 70 to about 120, preferably from about 80 to about 115, and more preferably from about 90 to about 110.

As used herein, the hydroxyl number is defined as the number of milligrams of potassium hydroxide required for the complete hydrolysis of the fully phthalylated derivative prepared from 1 gram of polyol. The hydroxyl number can also be defined by the equation:

$$OH = (56.1 \times 1000 \times f) / \text{mol. wt.} = 56100 / \text{eq. wt.}$$

wherein:

OH:    represents the hydroxyl number of the polyol,

f.    represents the nominal functionality of the polyol, i.e. the average number of hydroxyl groups per molecule of starter used to produce the polyol,

mol. wt.:    represents the number average molecular weight of the polyol,

and

eq. wt.:    represents the average polyol equivalent weight per hydroxyl group.

The following examples further illustrate details for the present invention. The invention, which is set forth in the foregoing disclosure, is not to be limited either in spirit or scope by these examples. Those skilled in the art will readily understand that known variations of the conditions of the following procedures can be used. Unless otherwise noted, all temperatures are degrees Celsius and all parts and percentages are parts by weight and percentages by weight, respectively.

## EXAMPLES

| | |
|---|---|
| ISO A: | toluene diisocyanate consisting of 80% by weight of the 2,4-isomer and 20% by weight of the 2,6-isomer |
| ISO B: | a polymeric polymethylene polyisocyanate having an NCO group content of about 32.1 % by weight, a functionality of about 2.4, and having a total monomer content of about 64% which comprises about 45% of the 4,4'-isomer, about 17% of the 2,4'-isomer and about 2% of the 2,2'-isomer, and about 36% by weight of higher molecular weight homologues of the MDI series |
| ISO C: | a polymeric polymethylene polyisocyanate having an NCO group content of about 32.4% by weight, a functionality of about 2.2, having a total monomer content of about 74% which comprises about 52% of the 4,4'-isomer, about 19% of the 2,4'-isomer and about 3% of the 2,2'-isomer, and about 26% by weight of higher molecular weight homologues of the MDI series |
| Polyol A: | a bisphenol A started polyether polyol having an OH number of 200 and an equivalent weight of about 280, prepared by alkoxylating bisphenol A with PO and EO. The product contains 8 wt.% EO. |

Polyol A was prepared by the following procedure:

Bisphenol A (326 g) and a commercial DMC catalyst (0.08 g) was charged into a stainless steel reactor equipped with a mechanical agitator and slowly heated with stirring to 165°C to melt the BPA. Once the BPA was melted, the reactor was vacuum stripped (0.5 psia) with a stream of nitrogen sparging through the reactor to remove traces of residual water for 30 minutes. The vacuum valve was closed, blocking the reactor and an initial charge of propylene oxide (35 g) and ethylene oxide (6 g) was pumped into the reactor. After several minutes, a rapid decrease in the pressure in the reactor was observed, indicating the catalyst had become activated and began to consume the oxide. The reactor temperature was cooled to 160°C, and the remaining charge of propylene oxide (373 g) and ethylene oxide (60 g) was added at a constant feed rate over 87 minutes. After the feed was complete, the reaction mixture was stirred at 130°C for an additional 30 minutes before vacuum stripping (30 minutes; 130°C) and discharging the clear colorless liquid from the reactor. BHT (0.4g; 500 ppm) was dissolved in the hot polyol.

Polyol B: a bisphenol A started polyether polyol having an OH number of 112 and an equivalent weight of about 500, prepared by propoxylating bisphenol A

Polyol B was prepared by the following procedure:

Bisphenol A (4000 g) and a commercial DMC catalyst (0.877 g) was charged into a stainless steel reactor equipped with a mechanical agitator and slowly heated with stirring to 165°C to melt the BPA. Once the BPA was melted, the reactor was vacuum stripped (0.5 psia) with a stream of nitrogen sparging through the reactor to remove traces of residual water for 30 minutes. The vacuum valve was closed, blocking the reactor and an initial charge of propylene oxide (500 g) was pumped into the reactor. After several minutes, a rapid decrease in the pressure in the reactor was observed, indicating the catalyst had become activated and began to consume the oxide. The remaining charge of propylene oxide (13,035 g) was added at a constant feed rate over 180 minutes. After the feed was complete, the reaction mixture was stirred at 130°C for an additional 30 minutes before vacuum stripping (30 minutes; 130°C), and discharging the clear colorless liquid from the reactor. BHT (1.75g; 100 ppm) was dissolved in the hot polyol.

Polyol C: a bisphenol A started polyether polyol having an OH number of 56 and an equivalent weight of about 1000, prepared by propoxylating bisphenol A

Polyol C was prepared by the following procedure:

Bisphenol A (2100 g) and a commercial DMC catalyst (0.922 g) was charged into a stainless steel reactor equipped with a mechanical agitator and slowly heated with stirring to 165°C to melt the BPA. Once the BPA was melted, the reactor was vacuum stripped (0.5 psia) with a stream of nitrogen sparging through the reactor to remove traces of residual water for 30 minutes. The vacuum valve was closed, blocking the reactor, and an initial charge of propylene oxide (330 g) was pumped into the reactor. After several minutes, a rapid decrease in the pressure in the reactor was observed, indicating the catalyst had become activated and began to consume the oxide. The remaining charge of propylene oxide (16,000 g) was added at a constant feed rate over 222 minutes. After the feed was complete, the reaction mixture was stirred at 130°C for an additional 30 minutes before vacuum stripping (30 minutes; 130°C), and discharging the clear colorless liquid from the reactor. BHT (1.84g; 100 ppm) was dissolved in the hot polyol.

Polyol C2: a bisphenol A started polyether polyol having an OH number of 56 and an equivalent weight of about 1000, prepared with mixed PO/EO feeds

Polyol C2 was prepared by the following procedure:

A two mole propoxylate of bisphenol A (3176 g) and a commercial DMC catalyst (0.922 g) was charged into a stainless steel reactor equipped with a mechanical agitator and slowly heated with stirring to 165°C. The reactor was vacuum stripped (0.5 psia) with a stream of nitrogen sparging through the reactor to remove traces of residual water for 30 minutes. The vacuum valve was closed, blocking the reactor, and an initial charge of propylene oxide (150 g) was pumped into the reactor. After several minutes, a rapid decrease in the pressure in the reactor was observed, indicating the catalyst had become activated and began to consume the oxide. A first mixed block of propylene oxide (8654 g) and ethylene oxide (920 g) was added at a constant feed rate over 123 minutes at which point the oxide feeds were stopped and the reactor was cooled to 130°C. Nitrogen pressure was added to 20 psia and a second mixed block of propylene oxide (2765 g) and ethylene oxide (2765 g) was added at a constant feed rate over 79 minutes. After the feed was complete, the reaction mixture was stirred at 130°C for an additional 30 minutes before vacuum stripping (30 minutes; 130°C), and discharging the clear colorless liquid from the reactor. BHT (1.84 g; 100 ppm) was dissolved in the hot polyol.

| | |
|---|---|
| Polyol D: | a sorbitol started polyether polyol having a functionality of 6, an OH number of 28 and an equivalent weight of about 2000, prepared by alkoxylating with about 92% by weight of propylene oxide and about 8% by weight of ethylene oxide using KOH catalysis. |
| Polyol E: | a polyol blend comprising 50% by weight of a polyether monol and 50% by weight of a polyether polyol, with the blend having a functionality of about 2.4 an OH number of about 94 and an equivalent weight of about 597. The monol was prepared by DMC catalyzed alkoxylation of an aliphatic alcohol with about 92% by weight of propylene oxide and 8% by weight of ethylene oxide to a hydroxyl number of about 18 and an equivalent weight of about 3120; and the polyether polyol was prepared by DMC catalyzed alkoxylation of glycerin with about 82% by weight propylene oxide and 18% by weight ethylene oxide to an OH number of about 170 and an equivalent weight of about 330. |
| Polyol F: | a polyol blend comprising 33% by weight of a polyether monol, 23% by weight of a polyether diol and 45% by weight of a polyether triol, with the blend having a functionality of about 2.4, an OH number of about 120, and an equivalent weight of about 470. The monol was prepared by DMC catalyzed alkoxylation of an aliphatic alcohol with about 90% by weight of propylene oxide and 10% by weight of ethylene oxide to a hydroxyl number of about 18 and an equivalent weight of about 3120; and the polyether diol was prepared by DMC catalyzed alkoxylation of propylene glycol with about 80% by weight propylene oxide and 20% by weight ethylene oxide to an OH number of about 170 and an equivalent weight of about 330; and the polyether triol was prepared by DMC catalyzed alkoxylation of glycerin with about 80% by weight propylene oxide and 20% by weight ethylene oxide to an OH number of about 170 and an equivalent weight of about 330. |
| Polyol G: | a polyether triol prepared by KOH propoxylation of glycerin to an OH number of about 168 and an equivalent weight of about 333. |
| Polyol H: | a glycerin initiated polyether polyol, having a functionality of about 2.8, an OH number of about 56 and an equivalent weight of about 1,000, which was prepared by alkoxylating glycerin and a small amount of propylene glycol with about 93% propylene oxide and about 7% by weight of ethylene oxide. |
| Polyol I: | a glycerin initiated polyether polyol having a functionality of about 3, an OH number of about 28 and an equivalent weight of about 2000, which was prepared by alkoxylating glycerin with 100% propylene oxide. |
| Polyol J: | a propylene glycol initiated polyether polyol having a functionality of about 2, an OH number of about 112, and an equivalent weight of about 500, which was prepared by alkoxylating propylene glycol with 100% by weight of propylene oxide. |
| Polyol K: | a propylene glycol initiated polyether polyol having a functionality of about 2, an OH number of |

| | |
|---|---|
| | about 56, and an equivalent weight of about 1000, which was prepared by alkoxylating propylene glycol with 100% by weight of propylene oxide. |
| Polyol L: | a SAN filled polymer polyol containing about 12% by weight of solids, and having an OH number of about 27. The base polyol was a blend of polyether triols and hexol prepared by propoxylating glycerin and sorbitol and then capping with 100% EO to provide a primary hydroxyl content of about 80%. The base polyol average functionality is about 4, and the average equivalent weight is about 1830. |
| Polyol M: | a SAN filled polymer polyol containing about 43% by weight of solids, and having an OH number of about 20. The base polyol was a triol prepared by propoxylating glycerin with about 80% PO and then capping with about 20% EO to provide a primary hydroxyl content of about 88%. The base polyol has a functionality of about 3, and an equivalent weight of about 1580. |
| Polyol N: | a glycerin initiated polyether polyol having a functionality of about 3, an OH number of about 28 and an equivalent weight of about 2000, which was prepared by alkoxylating glycerin with about 87% propylene oxide and then about 13% by weight of ethylene oxide as a cap. |
| Polyol O: | a polyether polyol having a functionality of about 3 an hydroxyl number of about 37, prepared by KOH-catalyzed alkoxylation of glycerin with a block of propylene oxide (4.9 wt.% of the total oxide), followed by a mixed block of propylene oxide (22.4 wt.% of the total oxide) and ethylene oxide (62.7 wt.% of the total oxide), finished with a block of ethylene oxide (10 wt.% of the total oxide). The equivalent weight is about 1500. |
| Polyol P: | a sorbitol initiated polyether polyol having a functionality of about 6, an OH number of about 100 and an equivalent weight of about 560, which was prepared by alkoxylating glycerin with a mixture of about 18% propylene oxide and about 82% by weight of ethylene oxide. |
| Polyol Q: | a glycerin initiated polyether polyol having a functionality of about 3, an OH number of about 168 and an equivalent weight of about 330, which was prepared by alkoxylating glycerin with about 100% by weight of ethylene oxide. |
| DP-1022: | a glycol modifier having an OH number of about 1245 |
| Catalyst A: | an amine catalyst blend commercially available from General Electric (OSi) as NIAX C-183 |
| Catalyst B: | an amine catalyst commercially available as NIAX Catalyst A-33 from General Electric (OSi) |
| Catalyst C: | an amine catalyst commercially available as NIAX Catalyst A-1 from General Electric (OSi) |
| Catalyst D: | an amine catalyst commercially available as DABCO Catalyst PC-77 from Air Products |
| Catalyst E: | dibutyltindilaurate, a catalyst commercially available as DABCO Catalyst T-12 from Air Products |
| Catalyst F: | stannous octoate, a catalyst commercially available as DABCO Catalyst T-9 from Air Products |
| Surfactant A: | a silicone surfactant commercially available as NIAX Silicone L-620 from General Electric (OSi) |
| Surfactant B: | a silicone surfactant commercially available as NIAX Surfactant L-5614 from General Electric (OSi) |
| Surfactant C: | a silicone surfactant commercially available as NIAX Surfactant L-6164 from General Electric (OSi) |
| Surfactant D: | a silicone surfactant commercially available as DABCO Surfactant B-8715LF from Air Products |
| Surfactant E: | a silicone surfactant commercially available as NIAX Surfactant U-2000 from General Electric (OSi) |
| Flame Retardant A: | a chlorophosphate flame retardant commercially available as FYROL FR-38 from AKZO-Noble. |

The formulations used to prepare the viscoelastic foams of the current invention and comparison examples are provided in the following Tables 1A, 2, 3, 4A, and 5A. All values are in parts by weight except for NCO index, which represents the calculated stoicheometric number of isocyanate functional groups available for reaction relative to the total number of isocyanate reactive groups available for reaction expressed as a percentage with 100 representing a one to one stoicheometry. The examples of Tables 1 through 4 were prepared by a free-rise process as described below.

The polyols, water, silicone surfactants, amine catalysts, tin Catalyst E, if employed, and other non-isocyanate additives were added to a one-half or one gallon cylindrical container fitted with baffles. The contents were mixed at 2400 rpm for 60 seconds with an agitator having two turbine impellers. The mixture was then degassed for 15 seconds. Tin Catalyst F, if employed, was added at this time. After degassing, the contents were mixed at 2400 rpm for 15 seconds, during which period the isocyanate was added with about 7 seconds of mixing remaining. The mixture was then poured into a 14 x 14 x 6-inch cardboard box, where it rose freely until the reaction was complete. A batch size sufficient to give a bun at least 6 inches high was employed. The freshly prepared bun was cured for 5 minutes in an oven at 120°C and then allowed to cure at ambient conditions for a minimum of 2 days. Observations made during foaming and cure are provided in Tables 1C, 2, 3 and 4B. The buns were then trimmed to 12 x 12 x 4 inches and were roller crushed 3 times to a minimum thickness of about 0.5 inches. These samples were then conditioned for at least 16 hours at standard temperature (~23°C) and humidity (~50%) before testing.

The examples of Table 5 were prepared by a molded foam process as follows. The polyols, water, silicone surfactants, amine catalysts and other optional components were added to a one-half gallon cylindrical container fitted with baffles. The contents were mixed at 3700 rpm for 60 seconds with an agitator having two turbine impellers. The mixture was then degassed for 60 seconds. The isocyanate was added to the container and the contents were mixed for 5 seconds. The mixture was then poured into a preconditioned mold, preheated to 65°C, while shaking the mixing container to ensure that the required amount was transferred to the mold. The mold was immediately clamped and sealed. The foam reaction proceeded for the prescribed demold time of 5 to 7 minutes, after which the foam was demolded. Examples 23-26 were made in a 15 inch x 15 inch x 2 inch thick mold while Examples 27-29 were made in a 15 inch x 15 inch x 4 inch thick mold. The foam was aged for seven days at room temperature prior to measuring foam properties.

Foam properties are shown in Tables 1B, 2, 3, 4B and 5B. Resilience and tear strength along with other standard physical or mechanical properties were measured per the procedures prescribed in ASTM D3574-03 unless noted otherwise below. Wet Compression Set (50%) was determined by measuring the height of three 2x2x1" specimens per sample, compressing to 50% of their height, holding for 22 hours in the compressed state at 50°C and 95% relative humidity, removing the specimens from the compression fixture and allowing the specimens to recover for 30 minutes at room temperature, remeasuring the height and then determining the average percent height loss relative to the original height.

The recovery characteristics of the viscoelastic foams were measured per the following general procedures using a standard IFD test device and typically using a 12x12x4 inch test specimen. The height of the foam sample was determined by lowering the IFD compression foot until a force of 1 lb was exerted on the compression foot by the foam. The sample was then compressed to 95% of this height (5% compression) and held for 1 minute after which time a 5% IFD reading was taken. The sample was then compressed to 25% of its original height (75% compression) and held for one minute. The foot was the returned as quickly as possible to the 5% height and the force exerted on the foot by the recovering foam recorded for either one minute or five minutes depending on the test. One or several of the following parameters were determined for comparing recovery of the samples.

70% Force Recovery Time, sec = time for the recovering foam to exert 70% of the original 5% IFD force on the foot

95% Height Recovery Time, sec = time for recovering foam to exert 1 pound force on the IFD. foot at the 5% height

The Temperature Sensitivity Ratio was determined using a foam specimen, typically 5x5x4 inch and a standard IFD test device. The foam specimen is conditioned at each of the prescribed hot and cold temperatures, typically +20°C, and -20°C for at least 16 hours and is quickly moved to the IFD unit for immediate testing. The height at 1 lb force is determined and then the sample is immediately compressed at 20 in/min to 75% of its height (25% compression) and a force reading is taken after one second. This procedure is repeated for the specimens conditioned at each temperature. The Temperature Sensitivity Ratio is calculated as follows.

$$\text{Temperature Sensitivity Ratio} \ = \ \frac{\text{Force at high temperature}}{\text{Force at low temperature}}$$

A Temperature Sensitivity Ratio closer to 1 indicates less temperature sensitivity.

The examples in Tables 1A through 1C demonstrate the improvement in tear strength and slower recovery provided by the low resilience, viscoelastic foams of the current invention through the use of relatively low levels of the prescribed polyether polyols (Ex. 2, 3, 7, 8) versus comparison foams (Ex. 1, 4, 5, 6, 9 and 10).

Table 1A: Foam Examples 1-10

| Example | 1 | 2 | 3 | 4 | 5 | 6 | 7 | 8 | 9 | 10 |
|---|---|---|---|---|---|---|---|---|---|---|
| Polyol E | | | | | | 79 | 75 | 70 | 80 | 80 |
| Polyol H | 20 | 20 | 20 | 20 | 20 | 20 | 20 | 20 | 20 | 20 |
| Polyol G | 80 | 75 | 70 | 80 | 79.8 | | | | | |
| Polyol A | | 5 | 10 | | | | 5 | 10 | | |
| DP-1022 | | | | | 0.2 | 1 | | | | |
| Water | 1.15 | 1.15 | 1.15 | 1.15 | 1.15 | 2.2 | 2.2 | 2.2 | 2.2 | 2.2 |
| Catalyst A | 0.6 | 0.6 | 0.6 | 0.6 | | 0.6 | 0.6 | 0.6 | 0.6 | 0.6 |

(continued)

| Example | 1 | 2 | 3 | 4 | 5 | 6 | 7 | 8 | 9 | 10 |
|---|---|---|---|---|---|---|---|---|---|---|
| Catalyst E | 0.1 | 0.1 | 0.1 | 0.1 | 0.1 | 0.1 | 0.1 | 0.1 | 0.1 | 0.1 |
| Surfactant A | 0.5 | 0.5 | 0.5 | 0.5 | 0.5 | 0.4 | 0.4 | 0.4 | 0.4 | 0.4 |
| Surfactant B | 0.5 | 0.5 | 0.5 | 0.5 | 0.5 | | | | | |
| Flame Retardant A | 3 | 3 | 3 | 3 | 3 | 3 | 3 | 3 | 3 | 3 |
| | | | | | | | | | | |
| Iso A | 27.62 | 27.76 | 27.9 | 27.96 | 27.9 | 34.62 | 33.64 | 34.35 | 33.63 | 32.93 |
| NCO Index | 82 | 82 | 82 | 83 | 82 | 95 | 95 | 95 | 97 | 95 |

Table 1B: Properties of Foam Examples 1-10

| Example | 1 | 2 | 3 | 4 | 5 | 6 | 7 | 8 | 9 | 10 |
|---|---|---|---|---|---|---|---|---|---|---|
| Density, pcf | 4.58 | 4.77 | 5.12 | 4.92 | 4.8 | 2.66 | 2.57 | 2.57 | 2.55 | 2.64 |
| Resilience, % | 3 | 3 | 3 | 4 | 3 | 14 | 13 | 12 | 15 | 14 |
| Air Flow (scfm) | 0.38 | 0.31 | 0.1 | 0.13 | 0.39 | 3.73 | 2.25 | 1.04 | 3.55 | 3.72 |
| IFD Ht, in. | 4.12 | 4.07 | 3.97 | 4.08 | 4.13 | 4.13 | 4.16 | 4.12 | 4.18 | 4.18 |
| 25% IFD, lbs | 10.76 | 9.75 | 8.05 | 11.56 | 10.28 | 9.53 | 12.86 | 12.96 | 13.57 | 12.52 |
| 65% IFD, lbs | 25.85 | 23.76 | 20.53 | 27.29 | 24.84 | 20.34 | 26.35 | 27.34 | 27 | 25.03 |
| 25% Return, % | 90.15 | 87.44 | 82.24 | 88.49 | 88.68 | 70.62 | 68.35 | 65.35 | 72.22 | 71.81 |
| Support Factor | 2.4 | 2.44 | 2.55 | 2.36 | 2.42 | 2.13 | 2.05 | 2.11 | 1.99 | 2 |
| Tensile, psi | 5.67 | 5.68 | 6.04 | 5.71 | 5.13 | 7.9 | 7.63 | 9.31 | 7.78 | 7.34 |
| Elongation, % | 201 | 229 | 265 | 199 | 196 | 182 | 168 | 204 | 163 | 161 |
| Tear Strength, pli | 0.77 | 0.85 | 0.98 | 0.77 | 0.79 | 0.76 | 0.94 | 0.99 | 0.8 | 0.72 |
| 50% Wet Set, % | 4.49 | 6.32 | 10.82 | 3.95 | 5 | 12.33 | 16.24 | 29.66 | 10.85 | 10.9 |
| 70% Force Rec. Time, sec. | 11 | 33 | 65 | 11 | 20 | ≥ 300 | ≥ 300 | ≥ 300 | 175 | 94 |
| 95% Ht. Recovery, secs | 0 | 5 | 20 | 0 | 0 | 1 | 3 | 9 | 1 | 1 |

Table 1C: Foam Characteristics for Examples 1-10

| Example | 1 | 2 | 3 | 4 | 5 | 6 | 7 | 8 | 9 | 10 |
|---|---|---|---|---|---|---|---|---|---|---|
| % Settling | 1.65 | 1.54 | 1.51 | 1.64 | 1.59 | 4.51 | 1.43 | 0.38 | 2.25 | 1.58 |
| Shrinkage | Nil | Nil | Nil | Nil | Nil | Nil | Nil | Nil | Nil | Nil |
| Cure | Good | Good | Good | Good | Good | Good | Good | Good | Good | Good |

The examples in Table 2 demonstrate the improvement in tear strength and slower recovery provided by the foams of the current invention through the use of relatively high levels of the prescribed polyether polyols (Ex. 11, 12) versus comparison foams (Ex. 13).

Table 2: Foam Examples 11-13

| Example | 11 | 12 | 13 |
|---|---|---|---|
| Polyol C | 63 | 70 | |
| Polyol H | 27 | 30 | 27 |
| Polyol K | | | 73 |
| Water | 1 | 1 | 1 |
| Catalyst A | 0.6 | 0.6 | 0.6 |
| Catalyst F | 0.3 | 0.3 | 0.3 |
| Surfactant B | 0. | 5 | 0.5 |
| Flame Retardant A | 3 | 3 | 3 |
| | | | |
| ISO A | 17.43 | 17.43 | 17.43 |
| Isocyanate Index | 95 | 95 | 95 |
| | | | |
| **Foam Properties** | | | |
| Density, pcf | 5.27 | 5.14 | 5.54 |
| Resilience, % | 17 | 16 | 20 |
| Air Flow (scfm) | 4.36 | 0.46 | 1.93 |
| IFD Ht, in. | 3 | 2.98 | 3.07 |
| 25% IFD, lbs | 7.54 | 8.03 | 6.81 |
| 65% IFD, lbs | 19.45 | 20.72 | 17.4 |
| 25% Return, % | 83.17 | 81.6 | 85.53 |
| Support Factor | 2.58 | 2.58 | 2.56 |
| Tensile, psi | 4.32 | 9.06 | 4.62 |
| Elongation, % | 305 | 493 | 287 |
| Tear Strength, pli | 1.24 | 1.65 | 0.89 |
| 50% Wet Set, % | 35.91 | 34.02 | 39.04 |
| 70% Force Rec. Time, sec. | 49 | 66 | 10 |
| 95% Ht. Recovery, secs | n.d. | n.d. | n.d. |
| | | | |
| **Foam Characteristics** | | | |
| % Settling | 0.05 | 0.98 | 0.08 |
| Shrinkage | Nil | Nil | Nil |
| Cure | Good | Good | Good |
| n.d. = not determined | | | |

Table 3: Foam Examples 14-16

| Example | 14 | 15 | 16 |
|---|---|---|---|
| Polyol L | 32 | 32 | 32 |
| Polyol B | | 65 | |

(continued)

| Example | 14 | 15 | 16 |
|---|---|---|---|
| Polyol C | 65 | | 65 |
| Polyol O | 3 | 3 | 3 |
| Water | 1 | 1.8 | 1.8 |
| Catalyst A | 0.8 | 0.4 | 0.4 |
| Catalyst F | 0.2 | 0.2 | 0.3 |
| Surfactant E | 1 | 1 | 1 |
| Flame Retardant A | 3 | 3 | 3 |
| | | | |
| Iso B | 25.17 | 45.17 | 37.01 |
| Isocyanate Index | 100 | 100 | 100 |
| | | | |
| **Foam Properties** | | | |
| Density, pcf | 5.96 | 3.44 | 3.32 |
| Resilience, % | 22 | 11 | 30 |
| Air Flow (scfm) | 1.16 | 0.03 | 0.95 |
| IFD Ht, in. | 3.02 | 3.11 | 3.09 |
| 25% IFD, lbs | 13.78 | 26.78 | 14.46 |
| 65% IFD, lbs | 37.67 | 58.91 | 35.28 |
| 25% Return, % | 92.85 | 67.5 | 89.89 |
| Support Factor | 2.73 | 2.2 | 2.44 |
| Tensile, psi | 8.95 | 19.56 | 11.6 |
| Elongation, % | 190 | 131 | 165 |
| Tear Strength, pli | 1.01 | 1.93 | 0.73 |
| 50% Wet Set, % | 1.46 | 2.97 | 2.9 |
| 70% Force Rec. Time, sec. | 2 | >300 | 4 |
| 95% Ht. Recovery, secs | n.d. | n.d. | n.d. |
| | | | |
| **Foam Characteristics** | | | |
| % Settling | 4.5 | 0.05 | 0.03 |
| Shrinkage | Nil | Slight | Slight |
| Cure | Good | Good | Good |
| n.d. = not determined | | | |

The examples in Tables 4A through 4B demonstrate the improvement in tear strength and slower recovery provided in the foams of the current invention through the use of different prescribed polyether polyols (Ex. 17, 19, 22) versus comparison foams (Ex. 18, 20, 21).

Table 4A: Foam Examples 17-22

| Example | 17 | 18 | 19 | 20 | 21 | 22 |
|---|---|---|---|---|---|---|
| Polyol C | 70 | | | | | |
| Polyol B | | | 40 | | | 70 |
| Polyol I | 30 | 30 | 58 | 58 | | |
| Polyol J | | | | 40 | 70 | |
| Polyol K | | 70 | | | | |
| Polyol P | | | 2 | 2 | | |
| Polyol Q | | | | | 30 | 30 |
| Water | 1 | 1 | 1.8 | 1.8 | 1.8 | 1.8 |
| Catalyst A | 0.6 | 0.6 | 0.35 | 0.35 | 0.4 | 0.4 |
| Catalyst F | 0.3 | 0.3 | 0.3 | 0.3 | 0.1 | 0.1 |
| Surfactant A | | | 0.5 | 0.5 | 1 | 1 |
| Surfactant B | 0.5 | 0.5 | 0.5 | 0.5 | | |
| Flame Retardant A | 3 | 3 | 3 | 3 | 3 | 3 |
| | | | | | | |
| Iso A | 17.05 | 17.05 | 25.82 | 25.82 | 37.46 | 37.46 |
| Isocyanate Index | 100 | 100 | 95 | 95 | 100 | 100 |

Table 4B: Properties and Characteristics of Foam Examples 17-22

| Example | 17 | 18 | 19 | 20 | 21 | 22 |
|---|---|---|---|---|---|---|
| **Foam Properties** | | | | | | |
| Density, pcf | 4.88 | 4.51 | 3.43 | 3.24 | 3.21 | 3.09 |
| Resilience, % | 20 | 25 | 17 | 23 | 10 | 3 |
| Air Flow (scfm) | n.d. | n.d. | 1.89 | 1.81 | 0.01 | 0.4 |
| IFD Ht, in. | 2.97 | 3.07 | 3.06 | 3.04 | 3.09 | 3.11 |
| 25% IFD, lbs | 9.67 | 9.36 | 9.91 | 8.88 | 9.74 | 11.86 |
| 65% IFD, lbs | 24.84 | 21.78 | 22.18 | 19.7 | 19.85 | 23.7 |
| 25% Return, % | 81.94 | 83.41 | 77.56 | 78.82 | 88.6 | 84.74 |
| Support Factor | 2.57 | 2.33 | 2.24 | 2.22 | 2.04 | 2 |
| Tensile, psi | 7.21 | 4.07 | 9.59 | 5.85 | 6.93 | 13.9 |
| Elongation, % | 406 | 218 | 334 | 326 | 221 | 315 |
| Tear Strength, pli | 2 | 0.93 | 2.18 | 0.84 | 0.62 | 1.3 |
| 50% Wet Set, % | 41.7 | 39.53 | 41.37 | 35.6 | n.d. | n.d. |
| 70% Force Rec. Time, sec. | 91 | 18 | 193 | 113 | 19 | 36 |
| 95% Ht. Recovery, secs | n.d. | n.d. | n.d. | n.d. | n.d. | n.d. |
| | | | | | | |
| **Foam Characteristics** | | | | | | |
| % Settling | 0.91 | 1.97 | 3.37 | 9.98 | 0.18 | 1.76 |
| Shrinkage | Nil | Nil | Nil | Nil | Slight | Nil |

(continued)

| Example | 17 | 18 | 19 | 20 | 21 | 22 |
|---|---|---|---|---|---|---|
| Cure | Slight green | Slight green | Good | Good | Good | Good |
| n.d. = not determined | | | | | | |

Table 5A:

| Example | 23 | 24 | 25 | 26 | 27 | 28 | 29 |
|---|---|---|---|---|---|---|---|
| Polyol F | | | | 70 | | | 60 |
| Polyol E | | | | | | 60 | |
| Polyol C2 | 70 | 70 | | | 60 | | |
| Polyol B | | | 50 | | | | |
| Polyol L | 27 | 27 | 47 | | | | |
| Polyol M | | | | 10 | 40 | 40 | 40 |
| Polyol N | | | | 17 | | | |
| Polyol D | | | | | 3 | 3 | 3 |
| Polyol O | 3 | 3 | 3 | 3 | 3 | 3 | 3 |
| Water | 1.45 | 1.45 | 1.45 | 1.45 | 2.5 | 2.5 | 2.5 |
| Catalyst B | 0.8 | 0.8 | 0.8 | 0.8 | 1 | 1 | 1 |
| Catalyst C | 0.25 | 0.25 | 0.25 | 0.25 | 0.1 | 0.1 | 0.1 |
| Catalyst D | | | | | 0.5 | 0.5 | 0.5 |
| Surfactant C | 2 | | | | 1.5 | 1.5 | 1.5 |
| Surfactant A | | | | | 0.2 | 0.2 | 0.2 |
| Surfactant D | | 0.5 | 0.5 | 0.5 | | | |
| | | | | | | | |
| Iso C | 27.89 | 27.89 | 32.01 | 34.62 | | | |
| Iso A | | | | | 32.1 | 35.6 | 38 |
| Isocyanate Index | 84 | 84 | 84 | 80 | 100 | 100 | 100 |

Example 5B: Properties of Examples 23-29

| Example | 23 | 24 | 25 | 26 | 27 | 28 | 29 |
|---|---|---|---|---|---|---|---|
| Density, pcf | 4.8 | 4.82 | 5.03 | 5.3 | 3.28 | 3.31 | 3.38 |
| Resilience, % | 1 | 12 | 9 | 9 | 23 | 15 | 15.5 |
| Air Flow (scfm) | 0.05 | 0.79 | 0.62 | 1.21 | 0.03 | 0.04 | 0.03 |
| IFD Ht, in. | 2.71 | 2.14 | 2.59 | 2.7 | 3.95 | 3.94 | 3.95 |
| 25% IFD, lbs | 10.51 | 10.19 | 15.25 | 10.81 | 57.64 | 43.35 | 53.68 |
| 65% IFD, lbs | 25.25 | n.d. | 41.46 | 31.96 | 131.4 | 112.57 | 132.21 |
| 25% Return, % | 84.09 | n.d. | 80.23 | 79.01 | 77.9 | 59.35 | 53.59 |
| Support Factor (65%/25%) | 2.4 | n.d. | 2.72 | 2.96 | 2.28 | 2.6 | 2.46 |
| 50% CFD, psi | 0.11 | 0.12 | 0.15 | 0.11 | 0.47 | 0.36 | 0.44 |

(continued)

| Example | 23 | 24 | 25 | 26 | 27 | 28 | 29 |
|---|---|---|---|---|---|---|---|
| Tensile, psi | 6.99 | 9.597 | 13.15 | 11.46 | 28.1 | 15.95 | 22.91 |
| Elongation, % | 158 | 200 | 209 | 192 | 179 | 86 | 113 |
| Tear Strength, pli | 0.71 | 0.887 | 1.2 | 0.66 | 2.49 | 0.99 | 1.65 |
| 50% Compression Set, % | 15.43 | 68.86 | 17.45 | 8.25 | 13.2 | 21.84 | 19.78 |
| 75% HACS, % | 11.95 | 43.55 | 13.13 | 5.6 | 13.34 | 23.81 | 17.89 |
| 50% Wet Set, % | 4.56 | 6.157 | 1.66 | 1.7 | 9.8 | 11.53 | 5.28 |
| 95% Ht. Recovery, secs | 24 | 17 | 31 | 16 | n.d. | n.d. | n.d. |
| Temp. Sensitivity Rating* | 0.43 | 0.44 | 0.11 | 0.12 | n.d. | n.d. | n.d. |
| *Force (+20°C)/Force (-20°C) @ 1 sec<br>n.d. = not determined | | | | | | | |

The examples in Tables 5A through 5B demonstrate the improvement in tear strength and slower recovery provided in molded foams of the current invention through the use of the prescribed polyether polyols (Ex. 23, 24, 25, 27) versus comparison foams (Ex. 26, 28, 29). Examples 23 and 24 demonstrate the improved temperature sensitivity exhibited by foams of the current invention relative to a comparison foam (Ex. 26) having similar firmness and slightly faster recovery time.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A process for the production of low resilience, viscoelastic foam comprising:

    (A) reacting:

        (1) at least one polyisocyanate component;

    with

        (2) an isocyanate-reactive component which comprises:

            (a) from 5 to 100% by weight, based on 100% by weight of component (2), of at least one polyether polyol containing about 2 to about 4 reactive hydroxyl groups per molecule, having an equivalent weight of about 280 to about 2000, and said polyether polyol is the alkoxylation product of one or more organic compounds which contains at least two aromatic rings per compound, an average of from about 2 to about 4 Zerewitinoff active hydrogen atoms and has an average equivalent weight of about 100 to about 575;

        and, optionally,

            (b) from 0 to 95% by weight, based on 100% by weight of component (2) of one or more isocyanate-reactive compound, with the proviso that this compound is different than polyether polyol (a);

    in the presence of:

        (3) one or more blowing agents;
        (4) one or more surfactants;

    and

(5) one or more catalysts;

at an Isocyanate Index of about 70 to about 120.

2. The process of Claim 1, wherein (2)(a) said polyether polyol contains an average of about 2 to about 3 reactive hydroxyl groups per molecule, and has an average equivalent weight of about 470 to about 1600.

3. The process of Claim 1, in which said polyether polyol (2)(a) is the alkoxylation product of one or more organic compounds which contains from 2 to 4 aromatic rings per compound, an average of from about 2 to about 3 Zerewitinoff active hydrogen atoms and has an average equivalent weight of about 110 to 400.

4. The process of Claim 1, in which the Zerewitinoff active hydrogen atoms of the one or more organic compounds are derived from hydroxyl functional groups.

5. The process of Claim 1, wherein the starter for said polyether polyol (2)(a) is selected from the group consisting of bisphenol-A, bisphenol-A alkoxylates and mixtures thereof.

6. The process of Claim 1, wherein (2) said isocyanate-reactive component comprises:

(a) from 40 to 100% by weight of at least one polyether polyol,

and

(b) from 0 to 60% by weight of at least one isocyanate-reactive compound,

with the sum of (a) and (b) totaling 100% by weight of (2) the isocyanate-reactive component.

7. The process of Claim 1, wherein (2)(b) said isocyanate-reactive compound is selected from the group consisting of polyether polyols, crosslinking agents, chain extenders and mixtures thereof.

8. The process of Claim 1, wherein (2) said isocyanate-reactive component has an average equivalent weight of about 200 to about 2000 and an average functionality of about 2 to about 4; and (2)(b) said isocyanate-reactive compound has an average equivalent weight of about 30 to about 6000 and an average functionality of about 2 to about 6.

9. The process of Claim 1, in which (2)(a) said polyether polyol is the alkoxylation product of one or more organic compounds in the presence of one or more double metal cyanide catalysts.

10. The process of Claim 1, in which the one or more organic compounds which is alkoxylated to form said polyether polyol (2)(a), and which contains at least two aromatic rings per compound, an average of from about 2 to about 4 Zerewitinoff active hydrogen atoms and has an average equivalent weight of about 100 to about 575 is selected from the group consisting of bisphenol A, bisphenol A alkoxylates and mixtures thereof.

11. The process of Claim 1, wherein said polyether polyol (2)(a) and at least a portion of said isocyanate-reactive compound (2)(b) are prepared simultaneously by alkoxylating the one or more organic compounds which are starters for said polyether polyol (2)(a) and at least a portion of the suitable starters for said isocyanate-reactive compound (2)(b).

12. The process of Claim 11, in which the alkoxylation occurs in the presence of at least one double-metal cyanide catalyst.

13. The process of Claim 1, wherein the foam has a resilience of less than 20%.

14. A low resilience, viscoelastic foam comprising the reaction product of:

(1) at least one polyisocyanate component:

with

(2) an isocyanate-reactive component which comprises:

(a) from 5 to 100% by weight, based on 100% by weight of component (2), of at least one polyether polyol containing about 2 to about 4 reactive hydroxyl groups per molecule, having an equivalent weight of about 280 to about 2000, and said polyether polyol is the alkoxylation product of one or more organic compounds which contains at least two aromatic rings per compound, an average of from about 2 to about 4 Zerewitinoff active hydrogen atoms and has an average equivalent weight of about 100 to about 575;

and, optionally,

(b) from 0 to 95% by weight, based on 100% by weight of component (2) of one or more isocyanate-reactive compound, with the proviso that this compound is different than polyether polyol (a);

in the presence of:

(3) one or more blowing agents;
(4) one or more surfactants;

and

(5) one or more catalysts;

at an Isocyanate Index of about 70 to about 120.

**15.** The foam of Claim 14, wherein (2)(a) said polyether polyol contains an average of about 2 to about 3 reactive hydroxyl groups per molecule, and has an average equivalent weight of about 470 to about 1600.

**16.** The foam of Claim 14, in which said polyether polyol (2)(a) is the alkoxylation product of one or more organic compounds which contains from 2 to 4 aromatic rings per compound, an average of from about 2 to about 3 Zerewitinoff active hydrogen atoms and has an average equivalent weight of about 110 to 400.

**17.** The foam of Claim 14, wherein the starter for said polyether polyol (2)(a) is selected from the group consisting of bisphenol-A, bisphenol-A alkoxylates and mixtures thereof.

**18.** The foam of Claim 14, wherein (2) said isocyanate-reactive component has an average equivalent weight of about 200 to about 2000 and an average functionality of about 2 to about 4; and (2)(b) said isocyanate-reactive compound has an average equivalent weight of about 30 to about 6000 and an average functionality of about 2 to about 6.

**19.** The foam of Claim 14, wherein said polyether polyol (2)(a) and at least a portion of said isocyanate-reactive compound (2)(b) are prepared simultaneously by alkoxylating the one or more organic compounds which are starters for said polyether polyol (2)(a) and at least a portion of the suitable starters for said isocyanate-reactive compound (2)(b).

**20.** The foam of Claim 19, in which the alkoxylation occurs in the presence of at least one double-metal cyanide catalyst.

**European Patent Office**

**EUROPEAN SEARCH REPORT**

Application Number

EP 07 01 1436

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/036049 A1 (HERZOG KLAUS-PETER [DE] ET AL HERZOG KLAUS-PETER [DE] ET AL) 28 March 2002 (2002-03-28) * paragraph [0068]; example 2 * ----- | 1-20 | INV. C08G18/32 C08G18/48 C08G18/66 C08G18/76 C08G65/26 |
| A | US 2001/004647 A1 (HAAS PETER [DE] ET AL) 21 June 2001 (2001-06-21) * paragraph [0059] * ----- | 1-20 | |
| A | US 6 491 846 B1 (REESE II JACK R [DE] ET AL) 10 December 2002 (2002-12-10) * column 12, lines 27-61 * ----- | 1-20 | |
| A,D | US 6 541 673 B1 (RODRIGUEZ CARMEN L [US] ET AL) 1 April 2003 (2003-04-01) * example 6 * ----- | 1-20 | |

TECHNICAL FIELDS SEARCHED (IPC)

C08G

The present search report has been drawn up for all claims

| Place of search | Date of completion of the search | Examiner |
|---|---|---|
| Munich | 11 October 2007 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 01 1436

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2007

| Patent document cited in search report | | Publication date | Patent family member(s) | | Publication date |
|---|---|---|---|---|---|
| US 2002036049 | A1 | 28-03-2002 | NONE | | |
| US 2001004647 | A1 | 21-06-2001 | AT | 292156 T | 15-04-2005 |
| | | | BR | 0005899 A | 17-07-2001 |
| | | | CA | 2328305 A1 | 17-06-2001 |
| | | | DE | 19961417 C1 | 19-07-2001 |
| | | | EP | 1108736 A1 | 20-06-2001 |
| | | | ES | 2239997 T3 | 16-10-2005 |
| | | | MX | PA00012035 A | 23-05-2002 |
| | | | NO | 20006420 A | 18-06-2001 |
| | | | PT | 1108736 T | 31-08-2005 |
| US 6491846 | B1 | 10-12-2002 | AT | 296849 T | 15-06-2005 |
| | | | BR | 0210587 A | 10-08-2004 |
| | | | CA | 2450785 A1 | 03-01-2003 |
| | | | CN | 1518572 A | 04-08-2004 |
| | | | CZ | 20033509 A3 | 14-07-2004 |
| | | | DE | 60204461 D1 | 07-07-2005 |
| | | | DE | 60204461 T2 | 27-04-2006 |
| | | | EP | 1401912 A1 | 31-03-2004 |
| | | | ES | 2242871 T3 | 16-11-2005 |
| | | | HK | 1068359 A1 | 08-09-2006 |
| | | | HU | 0400214 A2 | 28-06-2004 |
| | | | WO | 03000770 A1 | 03-01-2003 |
| | | | JP | 2004530767 T | 07-10-2004 |
| | | | MX | PA03011866 A | 26-03-2004 |
| | | | PL | 366781 A1 | 07-02-2005 |
| | | | PT | 1401912 T | 31-10-2005 |
| | | | TW | 593390 B | 21-06-2004 |
| US 6541673 | B1 | 01-04-2003 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6790871 B
- EP 1457508 A
- US 6204300 B
- US 6541673 B

- US 5158922 A
- US 5482908 A
- US 6391935 B

**Non-patent literature cited in the description**

- POLYURETHANE HANDBOOK. Hanser Publications, 1985